# FASCICULE DE BREVET EUROPEEN

(11) **EP 1 936 926 B1**
(45) Date de publication et mention de la délivrance du brevet: **27.03.2013**
(21) Numéro de dépôt: 07291498.9
(22) Date de dépôt: 12.12.2007
(51) Int. Cl.: H04B 1/38

(54) **Dispositif de communication à écoute amplifiée omnidirectionnelle**
Kommunikationsvorrichtung mit verstärktem, allseitigem Hörempfang
Communication device with omnidirectional amplified listening

(30) Priorité: 21.12.2006 FR 0611226
(43) Date de publication de la demande: 25.06.2008
(73) Titulaire: SAGEMCOM BROADBAND SAS, 92500 Rueil Malmaison (FR)
(72) Inventeur: Bourgoin, Gilles, 92500 Rueil Malmaison (FR)
(74) Mandataire: Fruchard, Guy

(56) Documents cités:
- EP-A- 1 580 838
- WO-A-97/47117

## Description

La présente invention concerne un dispositif de communication sans fil à écoute amplifiée.

### ARRIERE PLAN DE L'INVENTION

On sait que les dispositifs de communication sans fil, qu'il s'agisse de dispositifs de communication de type DECT ou de type GSM ou encore des terminaux hybrides pouvant fonctionner en relation avec une ligne fixe ou avec un réseau cellulaire, sont de plus en plus fréquemment équipés d'une écoute amplifiée permettant à un utilisateur de participer à une communication téléphonique sans être contraint de maintenir le dispositif de communication contre son oreille.

Par ailleurs, il est habituel que la communication soit assurée au moyen d'un signal radio transmis en utilisant une antenne pastille associée à un plan de masse porté par une plaque à circuit imprimé. Pour optimiser l'efficacité de ce système de transmission, il est préférable que l'antenne soit éloignée de tout obstacle et le système est donc placé en haut du dispositif de communication et dans le fond du boîtier. Toutefois, cette position correspond également à l'emplacement privilégié du haut-parleur.

Afin de réaliser tout à la fois la fonction de transmission du signal radio et la diffusion du son émis par le haut-parleur, il est habituel de disposer un petit haut-parleur ultraplat en sandwich entre l'antenne pastille et son plan de masse et de réaliser dans le plan de masse une ouverture de faible dimension afin de minimiser la fuite d'une partie du signal radio à travers cette ouverture. La qualité de la diffusion du son émis par le haut-parleur et toutefois très faible. Il n'est pas possible d'augmenter la dimension de l'ouverture car dans ce cas la transmission du signal radio s'en trouverait affectée.

### OBJET DE L'INVENTION

Un but de l'invention est de proposer un dispositif de communication sans fil à écoute amplifiée assurant tout à la fois une bonne diffusion du son émis par le haut-parleur et une bonne transmission du signal radio.

EP 1 580 838 décrit un téléphone comportant une carte de circuit imprimé reliée à des haut-parleurs et à une antenne.

### RESUME DE L'INVENTION

En vue de la réalisation de ce but, on propose, selon l'invention, un dispositif de communication sans fil comportant un boîtier contenant une antenne pastille adjacente à une paroi de fond du boîtier et reliée à une unité de traitement portée par une carte à circuit imprimé ayant une face pourvue d'un plan de masse s'étendant en regard de l'antenne pastille, et un haut-parleur relié à l'unité de traitement et disposé entre l'antenne pastille et le plan de masse, dans lequel la carte à circuit imprimé comporte en regard du haut-parleur une série d'ouvertures ayant chacune une dimension la plus grande adaptée pour qu'un signal radio émis par l'antenne pastille ne traverse pas le plan de masse.

Ainsi, la transmission du signal radio reste optimale quel que soit le nombre d'ouvertures réalisées dans la plaque, ce nombre étant déterminé pour obtenir une diffusion optimale des sons émis par le haut parleur.

De préférence, le haut-parleur est associé à une enceinte acoustique. On améliore ainsi la qualité du son diffusé.

### BREVE DESCRIPTION DES DESSINS

D'autres caractéristiques et avantages de l'invention apparaîtront encore à la lecture de la description qui suit d'un mode de réalisation préféré non limitatif de l'invention, en référence aux figures ci-jointes parmi lesquelles:

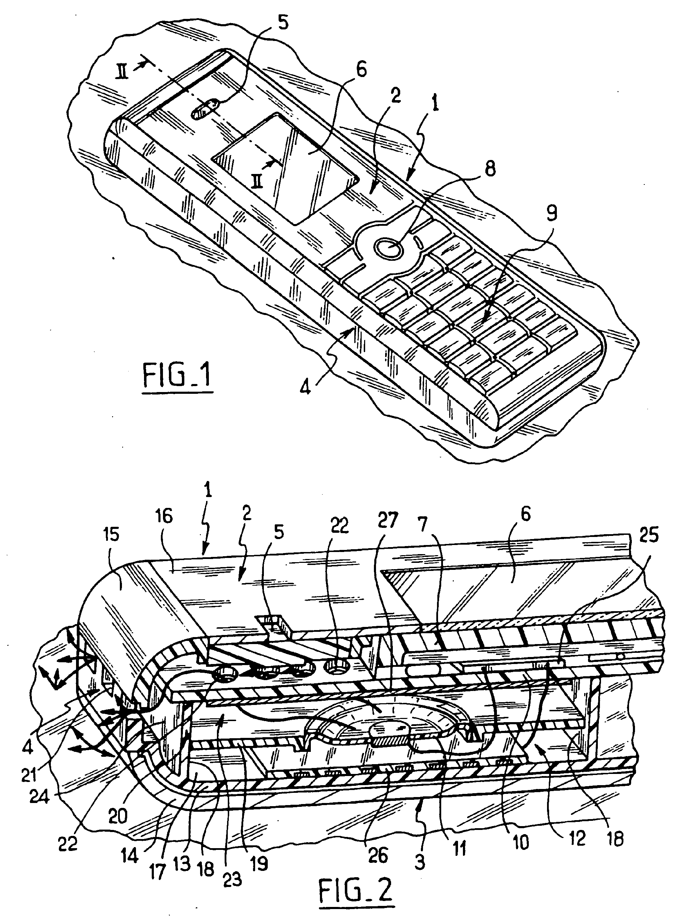

- la figure 1 est une vue en perspective schématique d'un dispositif de communication selon l'invention, posé à plat sur une surface,
- la figure 2 est une vue en coupe partielle très agrandie selon la ligne II-II de la figure 1.

### DESCRIPTION DETAILLEE DE L'INVENTION

En référence aux figures, le dispositif de communication selon l'invention comprend de façon connue en soi un boîtier 1 comportant une face principale avant 2 et une face principale arrière 3 réunie par une face latérale 4. Sur sa face avant, le dispositif de communication comporte un écouteur 5, un écran 6 associé à un afficheur 7, un microphone 8 et un clavier 9, ces différents composants étant reliés à une unité de traitement 25 portée par une carte à circuit imprimé 10 à laquelle est également relié un haut-parleur 11 formant l'un des composants d'une écoute amplifiée du dispositif de communication, et une antenne pastille 26 servant à la communication radio du dispositif. La carte à circuit imprimé 10 porte également un plan de masse 27 qui s'étend en regard du haut parleur.

Le haut-parleur 11 est associé à une enceinte acoustique 12 s'étendant à l'intérieur du boîtier. On entend par enceinte acoustique au sens de l'invention une enceinte comportant de façon connue en soi un volume adapté pour améliorer les performances acoustiques du haut-parleur associé dans une bande de fréquences donnée, cette enceinte acoustique pouvant être soit une enceinte étanche soit une enceinte reliée à l'extérieur par un ou plusieurs évents ayant des dimensions appropriées pour réaliser avec l'enceinte un résonateur de Helmholtz.

Dans le mode de réalisation illustré, le boîtier 1 comporte une demi coque arrière 13 partiellement recouverte d'une parure 14 et une demi coque avant 15 partiellement recouverte d'une parure 16, les parures 14 et 16 pouvant faire office de couvercle pour recouvrir certains composants du dispositif de communication, notamment les batteries servant à l'alimentation du dispositif de communication.

A son extrémité adjacente à l'enceinte acoustique 12, la demi coque arrière 13 comporte des ouvertures 21 traversant la face latérale 4 du boîtier 1.

Dans ce mode de réalisation, l'enceinte acoustique 12 comporte une paroi de fond 17 formée par une partie de la paroi de fond de la demi coque arrière 13, et une paroi latérale 18 réalisée en une seule pièce avec la paroi de fond 17 lors du moulage de la demi coque arrière 13. La paroi avant 19 de l'enceinte acoustique 12 est formée par une plaque fixée de façon étanche à la paroi latérale 18, par exemple par collage, et comportant une ouverture dans laquelle le haut-parleur 11 est fixé. La paroi avant 19 de l'enceinte acoustique 12 délimite avec la demi coque avant 15 un espace 23 dans lequel le son diffuse. L'antenne pastille 26 est fixée à la paroi de fond 17 du boîtier à l'intérieur de l'enceinte acoustique 12.

L'enceinte acoustique 12 a de préférence une forme aplatie de sorte qu'en combinaison avec sa position adjacente à la face principale 3 opposée à la face principale 2 portant l'écouteur 5 l'espace 23 a un volume maximum, ce qui favorise la diffusion du son tout en minimisant l'épaisseur totale du dispositif de communication.

La paroi latérale 18 est prolongée par un élément de cloison 20 en une seule pièce avec la paroi latérale 18. L'élément de cloison 20 entoure le haut-parleur 11 et son bord sert d'appui pour la plaque à circuit imprimé 10 qui y est fixée par exemple par des vis ou par collage.

Par ailleurs, sur une partie de sa surface en regard de l'espace 23, la plaque 10 est ajourée par une série d'ouvertures 22 ayant chacune une dimension la plus grande adaptée pour qu'un signal radio émis par l'antenne pastille ne traverse pas le plan de masse 27. En pratique la dimension la plus grande des ouvertures 22 est inférieure au quart de la longueur d'onde du signal radio, et de préférence inférieure au vingtième de la longueur d'onde, soit 8 mm pour un signal radio à 1,88 GHZ. Le nombre d'ouvertures 22 est déterminé en fonction de leurs dimensions pour assurer une diffusion satisfaisante des sons émis par le haut-parleur. Le bord extrême de la plaque ajourée 10 s'étend en surplomb par rapport à l'élément de cloison 20 pour former une chicane adjacente aux orifices 21. Le son provenant du haut-parleur 11 est ainsi diffusé dans un conduit en zigzag 24 délimité par l'élément de cloison 20 et la paroi latérale de la demi coque avant 15. Le son émis par le haut-parleur 11 subit ainsi des réflexions multiples sur les différents éléments de paroi de sorte qu'il débouche des orifices 21 selon des directions multiples illustrées par des flèches en trait épais sur la figure. En outre, la forme aplatie de l'enceinte acoustique 12 permet de réaliser un dispositif de communication généralement plat qui repose naturellement sur la face principale arrière 3 de sorte que les ondes sortant des orifices 21 subissent sur la surface sur laquelle le dispositif de communication repose une réflexion supplémentaire qui favorise la diffusion omnidirectionnelle et augmente le niveau du son.

Bien entendu, l'invention n'est pas limitée au mode de réalisation décrit et on peut y apporter des variantes de réalisation sans sortir du cadre de l'invention tel que défini par les revendications.

En particulier, bien que l'enceinte acoustique ait été illustrée sous une forme totalement intégrée à une des demi coques formant le boîtier, l'enceinte acoustique peut être associée au haut-parleur 11 selon un ensemble amovible à l'intérieur du boîtier. Dans ce cas l'antenne pastille peut être portée soit par l'ensemble amovible comportant le haut-parleur soit par la paroi du boîtier.

En outre, bien que l'invention ait été illustrée avec des ouvertures 22 de forme circulaire, les ouvertures pourront être réalisées selon des formes variées, en particulier des formes rectangulaires. Dans ce cas, la dimension la plus grande est la diagonale du rectangle.

## Revendications

1. Dispositif de communication sans fil comportant un boîtier (1) contenant une antenne pastille (26) adjacente à une paroi de fond (17) du boîtier et reliée à une unité de traitement (25) portée par une carte à circuit imprimé (10) ayant une face pourvue d'un plan de masse (27) s'étendant en regard de l'antenne pastille 26, et un haut-parleur (11) relié à l'unité de traitement (25) et disposé entre l'antenne pastille (26) et le plan de masse (27), **caractérisé en ce que** la carte à circuit imprimé (10) comporte en regard du haut-parleur (11) une série d'ouvertures (22) ayant chacune une dimension la plus grande adaptée pour qu'un signal radio émis par l'antenne pastille ne traverse pas le plan de masse (27).

2. Dispositif selon la revendication 1, **caractérisé en ce que** le haut-parleur est associé à une enceinte acoustique (12).

3. Dispositif selon la revendication 2, **caractérisé en ce que** l'antenne pastille (26) est fixée à la paroi de fond (17) du boîtier à l'intérieur de l'enceinte acoustique (12).

4. Dispositif selon l'une quelconque des revendications 1 à 3, **caractérisé en ce que** les ouvertures (22) de la carte à circuit imprimé ont une dimension la plus grande inférieure à un quart, et de préférence un vingtième d'une longueur d'onde du signal radio émis par l'antenne pastille.

## Claims

1. Wireless communication device comprising a housing (1) containing a patch antenna (26) adjacent a base wall (17) of the housing and connected to a processing unit (25) carried by a printed circuit board (10) having a face with an earth plane (27) facing the patch antenna (26), and a loudspeaker (11) connected to the processing unit (25) and arranged between the patch antenna (26) and the earth plane (27), **characterized in that** the printed circuit board (10) has opposite the loudspeaker (11) a series of apertures (22) each having a largest dimension such that a radio signal transmitted by the patch antenna does not pass through the earth plane (27).

2. Device according to Claim 1, **characterized in that** the loudspeaker is associated with an acoustic enclosure (12).

3. Device according to Claim 2, **characterized in that** the patch antenna (26) is fixed to the base wall (17) of the housing inside the acoustic enclosure (12).

4. Device according to any one of claims 1 to 3, **characterized in that** the apertures (22) of the printed circuit board have a largest dimension less than one quarter, and preferably one twentieth of a wavelength of the radio signal from the patch antenna.

## Patentansprüche

1. Vorrichtung zur drahtlosen Kommunikation, umfassend ein Gehäuse (1), das eine Flachantenne (26) enthält, die sich angrenzend an eine Bodenplatte (17) des Gehäuses befindet und die mit einer Verarbeitungseinheit (25) verbunden ist, die von einer Leiterplatte (10) getragen wird, die eine mit einer Masseebene (27) versehene Fläche hat, die sich gegenüber der Flachantenne (26) erstreckt, und das einen mit der Verarbeitungseinheit (25) verbundenen Lautsprecher (11) enthält, der zwischen der Flachantenne (26) und der Masseebene (27) angeordnet ist, **dadurch gekennzeichnet, dass** die Leiterplatte (10) gegenüber vom Lautsprecher (11) eine Reihe von Öffnungen (22) aufweist, die jeweils eine größtmögliche Abmessung besitzen, die geeignet ist, dass ein von der Flachantenne ausgegebenes Funksignal nicht die Masseebene (27) durchdringt.

2. Vorrichtung nach Anspruch 1, **dadurch gekennzeichnet, dass** der Lautsprecher mit einer Akustikkammer (12) verbunden ist.

3. Vorrichtung nach Anspruch 2, **dadurch gekennzeichnet, dass** die Flachantenne (26) an der Bodenwand (17) des Gehäuses im Inneren der Akustikkammer (12) befestigt ist.

4. Vorrichtung nach einem der Ansprüche 1 bis 3, **dadurch gekennzeichnet, dass** die Öffnungen (22) der Leiterplatte eine größtmögliche Abmessung haben, die kleiner als ein Viertel, vorzugsweise ein Zwanzigstel einer Wellenlänge des von der Flachantenne ausgegebenen Funksignals ist.
